# EUROPEAN PATENT APPLICATION

(11) **EP 0 652 456 A1**
(43) Date of publication of application: **10.05.1995**
(21) Application number: 94117671.1
(22) Date of filing: 09.11.1994
(51) Int. Cl.: G02C 5/22

(54) **Elastic hinge for glasses**

(30) Priority: 10.11.1993 IT PD930223
(71) Applicant: VISOTTICA S.p.A., I-31058 Susegana (Province of Treviso) (IT)
(72) Inventor: Montalban,Rinaldo, I-30124 Venezia (IT)
(74) Representative: Modiano, Guido, Dr.-Ing.

(57) **Abstract**

The invention relates to an elastic hinge for glasses of the type which comprises, at the end of a temple, an elongated hollow body which has a flat end; the body contains an elastic means which is arranged between the head of a pin that passes axially through it and a contrast element which is locked therein. The pin passes through the contrast element and engages a first hinge part to which a second hinge part is pivoted; the second hinge part is fixed to the front of the glasses and has a polygonal profile in which one side rests on the flat end of the hollow body. The hinge is characterized in that the contrast element has at least one external seat that accommodates and locks at least one portion of the hollow body which is deformed plastically by calking or by means of an equivalent operation.

## Description

The present invention relates to an elastic hinge for glasses.

Currently commercially available elastic hinges for glasses substantially comprise, at the end of a temple, an elongated hollow body which has a flat end and contains a spring arranged between the head of a pin, which passes axially through said spring, and a contrast element, which is locked inside said body.

The pin passes through the contrast element and engages a first hinge part to which a second hinge part is pivoted; said second hinge part is fixed to the front of the glasses and has a polygonal profile in which one side rests on the flat end of the hollow body.

All the parts contained in the hollow body are pre-assembled externally and then inserted in said body.

The various hinge types differ essentially in the way in which the contrast element is locked inside the hollow body.

A first type has a cylindrical contrast element provided with an external annular groove; a ball is inserted through an appropriate hole of the hollow body and is seated in a portion of said groove.

The diameter of the ball is such that once it is inserted in the hollow body, the thrust of the spring locks it between one edge of the annular groove of the contrast element and the inner edge of the insertion hole.

However, this locking action is not reliable, since any movements of the contrast element that compress the spring can reduce the pressure of the contact edges on the ball and may allow it to leave its seat, consequently disassembling the hinge.

In a second type of locking, the contrast element is again cylindrical in shape, with an external annular groove to be placed at a bore formed inside the hollow body.

Locking occurs by inserting a snap ring between the seat of the contrast element and the bore.

In practice, after pre-assembling the various hinge parts, the snap ring is placed in the annular seat of the contrast element and is deformed elastically, by means of an appropriate tool, so that it enters the hollow body.

When it reaches the bore, the snap ring expands and locks the contrast element inside the body.

As regards this type of execution, it should be noted that the formation of the bore is a rather complicated operation in view of the small size of the parts; the need to use a tool to insert the hinge parts in the hollow body has furthermore limited the success of this solution.

Another type of locking includes a screw, or an elastic pin, which passes through the hollow body and arranges itself in a portion of an adapted annular seat of the contrast element or passes through a portion thereof.

This type of locking and the corresponding type of hinge have also not become widespread due to the need to fix the screw or insert the elastic pin.

The aim of the present invention is to provide an elastic hinge for glasses which eliminates the drawbacks described above in known types.

A consequent primary object is to provide an elastic hinge for glasses which is structurally simple.

Another object is to provide a hinge whose components can be assembled quickly and in a stable manner.

Another object is to provide a hinge that can be manufactured at a low cost with conventional equipment.

This aim, these objects, and others which will become apparent hereinafter are achieved by an elastic hinge for glasses of the type which comprises, at the end of a temple, an elongated hollow body which has a flat end, said body containing an elastic means which is arranged between the head of a pin that passes axially through it and a contrast element which is locked therein, said pin passing through said contrast element and engaging a first hinge part to which a second hinge part is pivoted, said second hinge part being fixed to the front of the glasses and having a polygonal profile in which one side rests on the flat end of said hollow body, said hinge being characterized in that said contrast element has at least one external seat that accommodates and locks at least one portion of said hollow body which is deformed plastically by calking or by means of an equivalent operation.

Further characteristics and advantages of the invention will become apparent from the detailed description of an embodiment thereof, illustrated only by way of non-limitative example in the accompanying drawings, wherein:

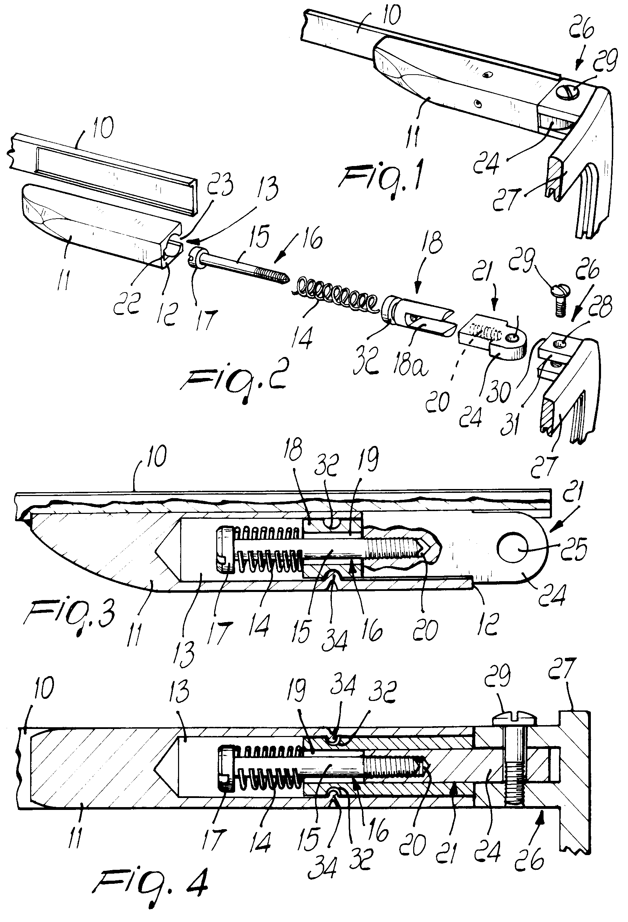

figure 1 is an external perspective view of a hinge according to the invention;
figure 2 is an exploded perspective view of the hinge;
figure 3 is a horizontal sectional view of the hinge;
figure 4 is a horizontal sectional view of the hinge.
   With reference to the above figures, an elastic hinge for glasses according to the invention comprises an elongated hollow body 11 which is fixed to the end of a temple 10 and has a flat end face 12 onto which a cylindrical dead hole 13 leads; said hole passes longitudinally through the hollow body.

A cylindrical helical spring 14 is accommodated inside said hole 13 and coils itself around the stem 15 of a screw 16 on the head 17 of which it rests with one end.

The other end of the spring 14 rests on a cylindrical contrast element 18 which is shaped complementarily to said hole 13, in which it is locked as specified hereinafter.

Said contrast element 18 is axially provided with a through hole 19 through which the stem 15 of the screw 16 passes; the threaded end of said screw engages in a complementarily threaded hole 20 of a first hinge part 21.

Said first hinge part is substantially shaped like a parallelepiped, fits between the walls of a diametrical slot 18a of the contrast element 18, and is located inside the hollow body 11 together with said contrast element.

The first hinge part 21 protrudes diametrically from the contrast element 18 and is accommodated, with its protruding parts, in complementarily shaped diametrically opposite wider portions 22 and 23 of the hole 13.

Said first hinge part 21 protrudes from the hollow body 11 with a part 24 which is provided with a hole 25 for pivoting a second hinge part 26 which is substantially fork-shaped.

The second hinge part 26 is fixed to the front 27 of a pair of glasses and has holes 28, which correspond to said hole 18, for a threaded pivot 29.

In said second hinge part 26, the external profile of the fork is polygonal, with at least two sides, respectively 30 and 31, which form stable equilibrium positions for the rotation of the temple 10; one of said sides rests on the end face 12 of the body 11.

This rotation can occur by virtue of the compression of the spring 14 produced by traction applied by the first hinge part 21 and therefore by the screw 16.

According to the invention, said contrast element 18, conveniently made of stainless steel, has an external annular groove 32 in which portions 33 of the hollow body 11 are transferred by calking, which is performed from the outside by means of appropriate punches (not shown), locking the contrast element 18 in said hollow body.

In practice, the parts of the hinge are pre-assembled and then inserted in the hollow body 11; a final calking operation is then performed at the regions where the annular groove 32 arranges itself.

This plastic deformation of portions of the hollow body 11 does not affect the contrast element 18, which as mentioned is made of stainless steel.

In practice it has been observed that the intended aim and objects of the present invention have been achieved.

The contrast element 18 is in fact locked without interposing another part such as the ball, the snap ring, the elastic pin, or the screw.

The pre-assembled parts are inserted easily without the aid of tools.

The calking operation makes the locking stable and irreversible.

Manufacture of the hinge does not entail particular technical difficulties with respect to currently commercially available hinges.

In practice, the materials employed, so long as they are compatible with the contingent use, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. Elastic hinge for glasses of the type which comprises, at the end of a temple, an elongated hollow body which has a flat end, said body containing an elastic means which is arranged between the head of a pin that passes axially through it and a contrast element which is locked therein, said pin passing through said contrast element and engaging a first hinge part to which a second hinge part is pivoted, said second hinge part being fixed to the front of the glasses and having a polygonal profile in which one side rests on the flat end of said hollow body, said hinge being characterized in that said contrast element has at least one external seat that accommodates and locks at least one portion of said hollow body which is deformed plastically by calking or by means of an equivalent operation.

2. Elastic hinge according to claim 1, characterized in that said at least one external seat of said contrast element is constituted by an annular groove.

3. Elastic hinge according to one or more of the preceding claims, characterized in that said contrast element is substantially cylindrical, has an axial through hole for said pin, and has a diametrical slot for the insertion of said first hinge part.

4. Elastic hinge according to one or more of the preceding claims, characterized in that said contrast element is made of stainless steel or equivalent material which is not subjected to deformation by the calking of said body.

5. Elastic hinge for glasses according to one or more of the preceding claims, characterized by what is described and illustrated in the accompanying drawings.
